Europäisches Patentamt

European Patent Office

Office européen des brevets

(19)

(11) Publication number: **0 159 187**
**A2**

# EUROPEAN PATENT APPLICATION

(12)

(21) Application number: 85302649.0

(22) Date of filing: 16.04.85

(51) Int. Cl.⁴: **G 06 F 15/70**

(30) Priority: **17.04.84 GB 8409947**
**03.05.84 GB 8411372**

(43) Date of publication of application:
**23.10.85 Bulletin 85/43**

(84) Designated Contracting States:
**AT BE CH DE FR GB IT LI LU NL SE**

(71) Applicant: **SIMON-CARVES LIMITED**
**Regal House Duke Street**
**Stockport Cheshire SK1 3AA(GB)**

(71) Applicant: **THE THAMES POLYTECHNIC**
**Wellington Street** –
**London SE18 9PF(GB)**

(72) Inventor: **Pace, Ronald Ernest**
**15 Cotswold Avenue Hazel Grove**
**Stockport Cheshire(GB)** .

(72) Inventor: **Barnes, Roger Neville**
**26 Bridal Way**
**Billericay Essex(GB)**

(74) Representative: **Ajello, Michael John**
**P.O. Box 25**
**Stockport Cheshire SK3 OXW(GB)**

(54) A surface topography measuring system.

(57) A system whereby the topography of a surface may be measured and recorded comprising a laser (L) producing a narrow beam (LO) striking the surface at point (O), a television camera (T) capable of detecting the angular bearing of the laser illuminated spot at point (O) in terms of three-dimensional co-ordinates (x,y, z), and a computer programmed to correlate signals from the television camera as the laser beam is scanned across the surface, thus to produce a reading of the three-dimensional shape of the surface. Such a system can be used, for example, for monitoring the surface topography of a stockpile of bulk materials to be harvested so as to ensure optimum performance of a material transport system, or to establish the shape of a building or land mass in a surveying operation.

FIG.2

# A SURFACE TOPOGRAPHY MEASURING SYSTEM

THIS INVENTION concerns a system for measuring the shape or topography of a surface such as the profile of bulk solid materials in stock piles,in silos or in ships' holds. The results can be used to manoeuvre equipment for reclaiming or unloading such material, or alternatively for depositing or loading the materials. It is also envisaged that the results could be used, together with suitable computer programmes, as a vision system for use in robotic applications or for guidance systems in driverless vehicles.

In cases in which the environment above a surface to be measured is clouded, for example, by dust or moisture, to the extent that conventional optical systems are unsuitable or in cases where non-optical systems such as those employing ultrasonics cannot be used, there is a requirement for a system which can accurately detect and measure the shape of a surface by reference to the level thereof at a number of spaced positions thereon thus adequately to describe the features of the surface.

According to the present invention there is provided a surface topography measuring system comprising a laser producing a narrow beam of light, means for scanning said beam from a first given point, towards and across a surface from which the incident light is scattered, means for establishing the instantaneous direction of said beam from said first given point, an optical receiver positioned at a second given point for detecting the scattered light and including means for establishing the instantaneous position on said surface, from which the light is scattered, and a computer memory in which associated signals are stored representative of a number of matched established directions and positions as aforesaid, and programmed to correlate said associated signals thus to produce a reading of the three-dimensional shape of said surface as scanned by the laser beam.

An embodiment of the invention will now be described, by way of example only, with reference to the accompanying drawings in which:-

Fig. 1 is a diagrammatic representation of the profile of a surface to be measured;

Fig. 2 is a diagram illustrating the principle employed by the system;

Fig. 3 shows a non-interlaced television raster scan;

Figs. 4a to 4c illustrate various video wave forms which may be received in the system;

Fig. 5 is a circuit diagram;

Fig. 6 illustrates typical wave forms produced by the circuit of Fig. 5;

Fig. 7 is a circuit diagram;

Fig. 8 illustrates typical waveforms produced by the circuit of Fig. 7;

Fig. 9 is a circuit diagram;

Fig. 10 illustrates positions on a surface to be scanned;

Fig. 11 illustrates an alternative arrangement of positions on said surface;

Fig. 12 is a circuit diagram;

Fig. 13 is an illustration of an embodiment of invention in a practical application.

and Fig. 14 is an illustration of an embodiment in a further practical application.

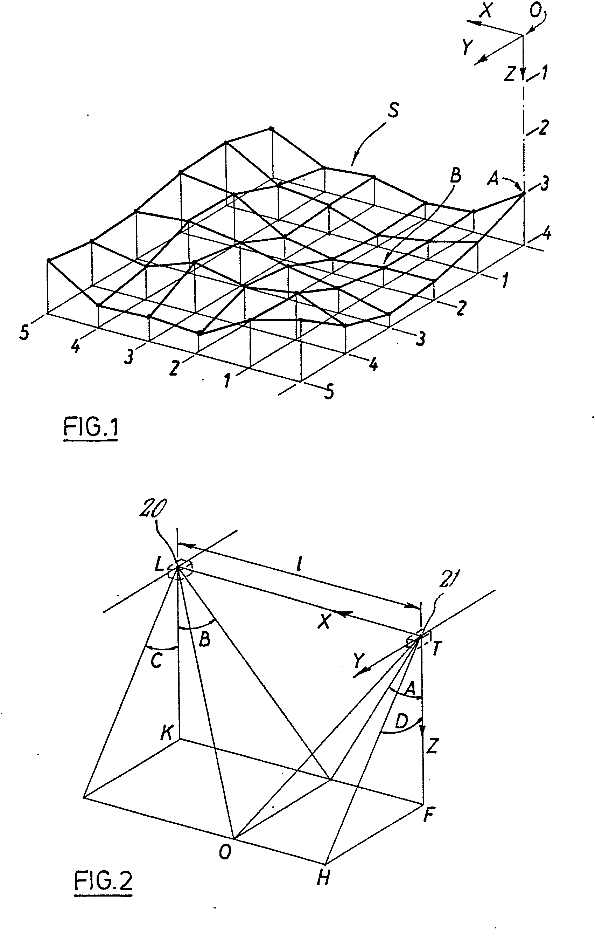

The system comprises means whereby information concerning the three dimensional shape of a surface may be built up in a computer memory in the form of an array of three dimensional co-ordinates. A pictorial representation of such information is shown in Fig. 1. Each designated point on the surface S may be assigned co-ordinates $(x,y,z,)$ relative to the origin at point 0 (zero). For example a point A has the co-ordinates $(0,0,3,)$ while a point B has the co-ordinates $(1, 2, 3.5)$.

The principle by which the system operates is described with reference to Fig. 2. In Fig. 2 at a first given point L is a laser together with means for deflecting its beam at known angles from a vertical datum defined by the line LK. At a second given point T which is at a distance d from the point L, is situated a television camera pointing generally downward. The line TF defines a vertical datum and is parallel with line LK. The point T is considered the origin of the co-ordinate system, the line TF is on the z axis, the line TL forms the x axis, and the line TH is on the y axis. The three axes are at right angles to each other.

A point on the surface S is mapped as follows. A laser beam is transmitted from the laser/deflector system situated at L at a known angle to the vertical line LK. In Fig. 2 the beam is shown being transmitted at an angle B from the vertical LK in the x axis direction (i.e. in the plane LTFK) and at an angle C from the vertical in a plane through LK and parallel to the y axis direction.

The laser beam is shown striking the surface of the material at a point O. The laser radiation will be scattered from this point and some energy will be scattered in a direction from O towards the television camera at point T. The direction of the line OT, viz. the angular bearing of the laser illuminated point T, relative to the x and y axes, is shown on Fig. 2 as an angle A from the vertical TF in the x axis direction (i.e. in the plane LTFK) and at an angle D in the y axis direction.

The angles B and C are known as these are input commands to the laser, and the angles A and D may be derived from the television camera by detecting the position in the television raster scan corresponding to the point O that is illuminated by the laser.

To do this it is first necessary to detect a signal in the video wavefrom which corresponds to the laser illuminated spot, and to use the detected signal to indicate the particular line of the raster scan, and the position in that line where the detected signal occurs.

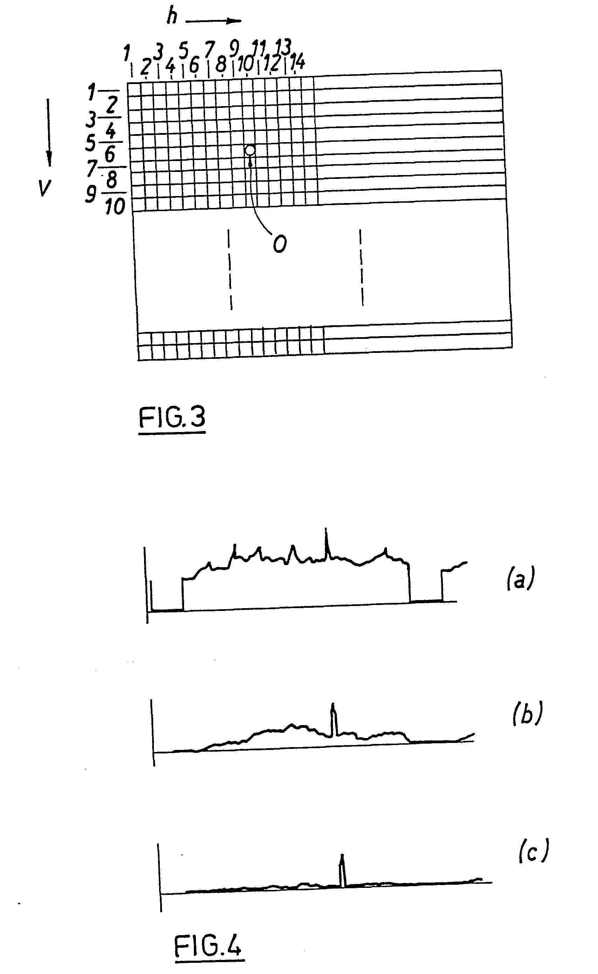

Fig. 3 shows a non-interlaced television raster

0159187
HP/1775

scan. Scanning is shown as starting in the top left hand corner of the diagram, line 1 is scanned from left to right, then line 2, and so on to the last line in the frame. This sequence of scanning being repeated continuously. If the laser illuminated spot is detected at the point marked 0 in the scan, circuits are required to measure and to store the co-ordinates (h,v) which in this example would be (10,6). The number of lines employed in the raster scan is best decided from considerations of the resolution required of the system and of the angle of the field of view required in the vertical direction. A typical example based upon a conventional 625 line television system is given later though many different systems could be employed dependent upon circumstances.

The television camera may be positioned so that the horizontal (h) and vertical (v) axes of the camera are aligned either with the x and y axes of the system shown in Fig. 2, respectively, or the other way round, i.e. with the y and x axes respectively. With either orientation the angles A and D can be derived from the line number (v) and the position (h) in the line where the detected laser spot occurs.

Thus the angles B and C are specified as commands to the laser deflection system, and the angles D and A are deduced from the co-ordinates (h,v) derived from the camera scan. Note that in Fig. 2 the angle C equals the angle D and this fact can be used to verify the validity of a detected signal, as will be described.

It may be shown that the co-ordinates $(x,y,z)$ of the point O in Fig. 2, relative to the co-ordinate origin at T are given by the following equations.

$$x = \frac{d \tan A}{(\tan B + \tan A)}$$

$$y = \frac{d \tan C}{(\tan B + \tan A)}$$

$$z = \frac{d}{(\tan B + \tan A)}$$

The overall derivation of the co-ordinates of a point on the surface of a pile of bulk solids material (or of a point on a wall or in a scene of a robotic vision system) requires the following sequence of functions:-

1) The laser must set the beam in a given position and maintain it stationary for an appropriate time. The deflection angles B and C must then be stored in a computer memory;

2) The television camera must scan the field of view, and the laser illuminated spot on the surface, (or in the scene) must be detected and the position in the line (h) and the line number (v) at which the spot is detected must be measured and stored in the computer memory;

3)   The geometry of the lens system of the camera must be known, and the (h,v) co-ordinates in the scan which correspond to the z axis  direction TF in Fig. 2 must also be known.  This information will allow a computer program to calculate the angles A and D and also their tangents from the measured (h,v) co-ordinates by appropriate offsets and scaling factors.  A check can be made at this stage to see if the angle D is sufficiently close to the value of the angle C originally fed to the laser deflector system.  If the angles are not sufficiently close then the reading may be rejected; and

4)   If the reading is accepted, a computer program can then use the data i.e. the angles A, B and C to calculate the co-ordinates (x,y,z) of the point O.

The television camera will normally respond to the entire scene within the field of view of the lens system, in addition to the spot produced by the laser beam.  Means are therefore required to distinguish the laser illuminated spot from all other optical stimuli within the field of view of the camera.

The television camera will normally respond to optical inputs over a broad spectrum of wavelengths, whereas the laser beam will normally produce optical energy in an

- 9 -

extremely narrow band of wavelengths centred on its characteristic wavelength. A very narrow bandwidth optical filter with a peak response at the laser wavelength may be positioned in front of the camera so as to admit energy at the laser wavelength to the camera and supress much of the energy at other wavelengths.

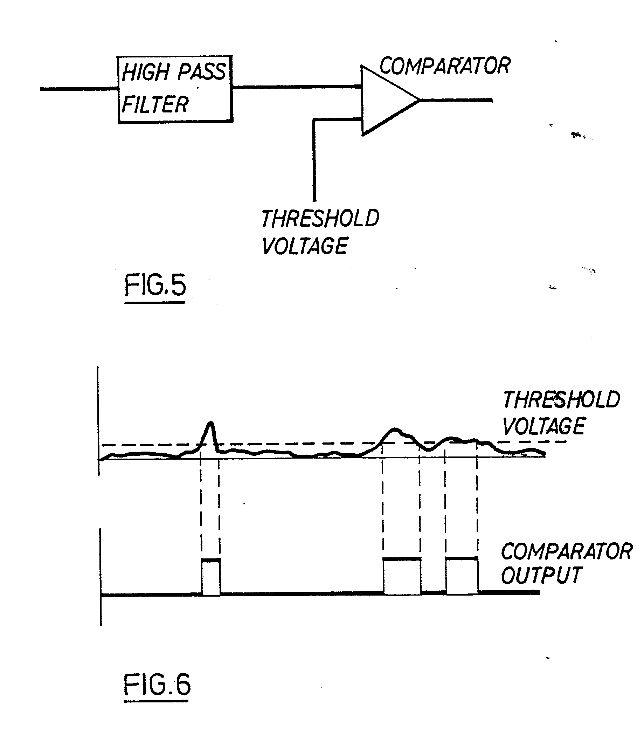

Figs. 4(a) to 4(c) show the camera response for the particular line which scans through the laser illuminated spot. Fig. 4(a) shows a typical response of the camera without a narrow bandwidth optical filter. Fig. 4(b) shows the camera response when an optical filter is included. It will be noted that the amplitude of the pulse due to the laser illuminated spot remains unchanged. There will still be some response from the optical input of the general scene, and means are required to detect the presence of a narrow pulse which corresponds to laser spot. A scanning system based upon a conventional 625 line television system will be described, and it will be shown that the width of the pulse in the video waveform for that particular system is of the order of 140 nS duration irrespective of the distance of the laser spot from the camera, provided that the camera is focussed. The pulse will also be positive-going and will be superimposed upon the signals remaining from the general wideband optical input after optical filtering. Such remaining signals are unlikely to contain features similar to the pulse produced by the laser spot unless there happens to be an independent source of energy, for example, a lamp in the camera field of view with sufficient energy at the laser wavelength. If such a source triggers the detection circuit, the result will be rejected by software unless the angle D subtended from the camera to such a source corresponds to the angle C of the laser deflector in the y axis direction as previously described.

To detect the pulse, due to the laser spot, the remaining low frequency components in the waveform shown in Fig. 4(b) may be removed by using a suitable high pass filter to yield a waveform as shown in Fig. 4(c). The presence of a pulse in a waveform of this type may be detected by using a comparator having an appropriate threshold as shown in the circuit diagram of Fig. 5. Typical waveforms showing the response of a comparator are shown in Fig. 6.

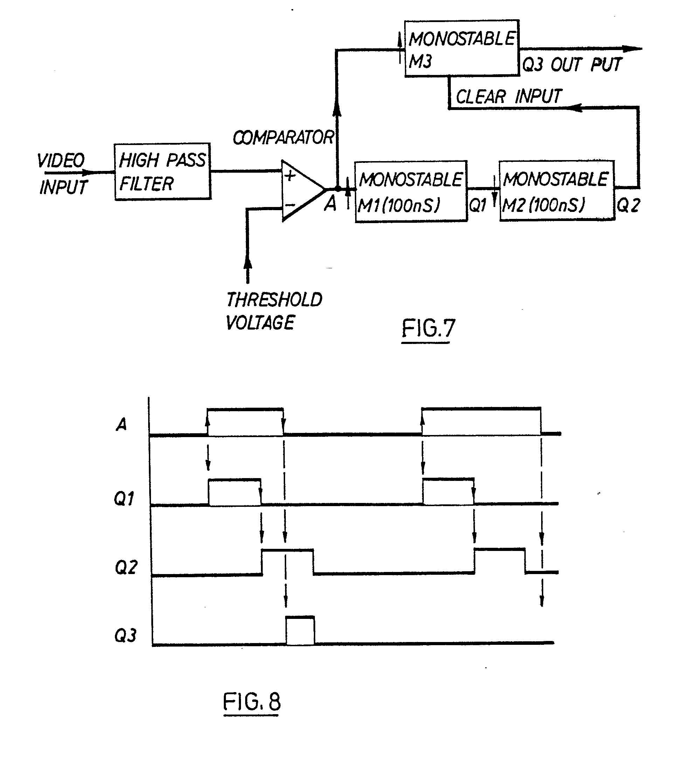

Further processing can be carried out to reject pulses from the comparator which are not of correct time duration. Such a circuit is shown in Fig. 7. The function of this circuit is to produce an output pulse only when the input is a pulse of duration between say 100 nS and 200 nS. These times are adjustable and may be arranged to suit any desired pulse width. The use of this type of circuit would reject spurious pulses that could not originate from the laser spot in the field of view of the camera.

0159187

The principle of operation of the circuit of Fig. 7 is illustrated by the timing diagram of Fig. 8. The rising edge of the output pulse A from the comparator triggers a monostable M1 for a period of 100 nS. The falling edge of monostable M1 output Q1, triggers a monostable M2 for a period of 100 nS. The output Q2 of monostable M2 is connected to the clear input of a monostable M3, which is triggered by the falling edge of the A pulse, provided that the clear input happens to be high. Thus a pulse Q3 can only occur at monostable M3 output if the falling edge of the A pulse occurs during the time that the Q2 pulse is at logic 1, i.e. for a time starting 100 nS after the rising edge of the A pulse and ending 100 nS afterwards.

There will now be described in general terms the principle of a digital time base. The time base contains a counter, acting as a register the contents of which indicate the line which is currently being scanned by the camera. A second counter/register contains a number which indicates the position in that line which is currently being scanned. The system also produces line and frame pulses suitable for synchronising the line and frame sawtooth scanning generators within the camera. Alternatively digital to analogue convertors can be used to provide sawtooth analogue voltage waveforms directly for driving the deflection circuits in the camera.

When the laser illuminated spot is detected from the camera video signal the contents of the "line" counter/ register, and the "position-in-line" counter/register are stored in secondary buffer registers. The number in these buffers therefore corresponds to the v and h co-ordinates of the laser illuminated spot in the camera field of view. These numbers may then be transferred into the computer memory at any suitable time for subsequent processing.

This digital time base is suitable for use with a camera having a lens system which gives a field of view of 24° in the horizontal direction and 18° in the vertical direction, (i.e. an aspect ratio of 4:3). It is based upon a conventional 625 line system wherein only 575 lines are actually used for scanning the optical scene. If the vertical angle of the field of view is 18° , each line represents a resolution of 0.55 mRad. This is approximately twice as fine as the required resolution of about 1.0 to 1.5 mRad, which is set by the divergence of the laser beam.

This design uses the same line rate as a conventional 625 line system but halves the vertical resolution by removing the interlace from the scanning process. Thus instead of having a time base which scans 625 (effectively 575) lines 25 times per second, the removal of the interlace produces a scan of 312 (effectively 287) lines 50 times per second.  This gives a vertical resolution of about 1.1 mRad with the lens as specified.

The vertical scan is therefore resolved into 287 parts and to achieve the same resolution in the horizontal direction requires the horizontal scan to be resolved into 382 parts (i.e. 287 x 4/3) if the aspect ratio is 4:3.  In a conventional 625 line system the timing of a line is as shown in Fig. 4(a).  The line time is 64 uS but only 52 uS are used for the actual video scan.  Therefore the time associated with each horizontal element of resolution is 52/382 uS i.e. approx 136 nS, and the number of these time elements per complete line of 64 uS duration is approx 470. Note that a period of 136 nS corresponds to a frequency of 7.35 mHz.

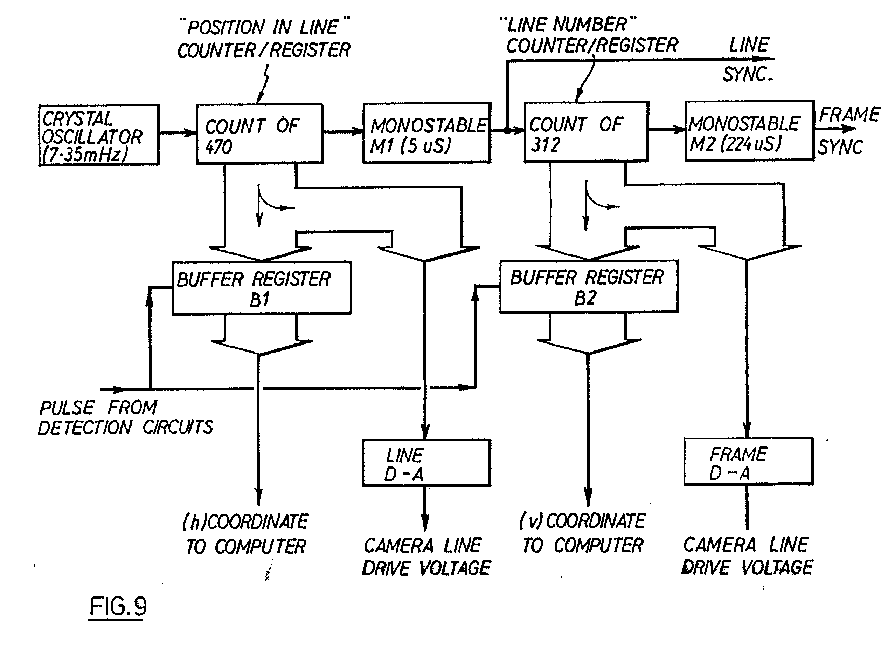

Fig. 9 shows the block diagram of a digital time base having the general features as described above.  A crystal controlled oscillator produces a clock signal at a frequency of 7.35 mHz which feeds a digital counter, the contents of which are increased by one for each clock pulse i.e. at intervals of 136 nS.  This counter serves as the "position-in-line" register.  When the contents of this counter/register reach 470, it is automatically reset to zero.  The frequency with which the counter resets to zero is 1564 kHz (7.35mHz – 470) which has a periodic time of 64 uS.  Each time the counter/register is reset to zero, monostable M1 in Fig. 9 is triggered and produces a ·pulse of 5 uS duration for camera line synchronisation purposes, these pulses are also passed to a second counter (the line number register) which counts up to 312 before resetting. When this counter/register resets a pulse is produced in monostable M2 of 224 uS duration for camera frame synchronisation purposes, these pulses are also passed to a second counter (the line number register) which counts up to 312 before resetting. ·When this counter/register resets a pulse is produced in monostable M2 of 224 uS duration for camera frame synchronisation purposes.

When a pulse is produced from the detection circuits signifying that a laser spot has been detected in the camera field of view, both of the secondary buffer registers B1 and B2 are strobed so that they latch the contents of the "position-in-line" register and the "line number" register at that instant. These numbers may then be transferred to the computer memory.

The digital to analogue converters produce voltages from the contents of the two counter registers for use in driving the deflection circuits in the camera if required.

In a television camera the optical energy arriving via the lens system onto the photosensitive surface of the camera tube builds up a charge pattern in proportion to the optical energy at each picture point.  The scan process produces a signal proportional to the charge as it passes each picture point and in so doing reduces the  charge to zero.  The charge at a particular point then builds up to  a value proportional to the optical energy until it is next scanned.  Thus the camera response to a particular is point is proportional to the integral of the energy since the point was last scanned.  It is therefore desirable, for maximum sensitivity, for the laser spot to dwell in the camera field of view for a period equal to a frame scan period.  At the same time it is desirable to maximise the number of points which can be measured in each second.

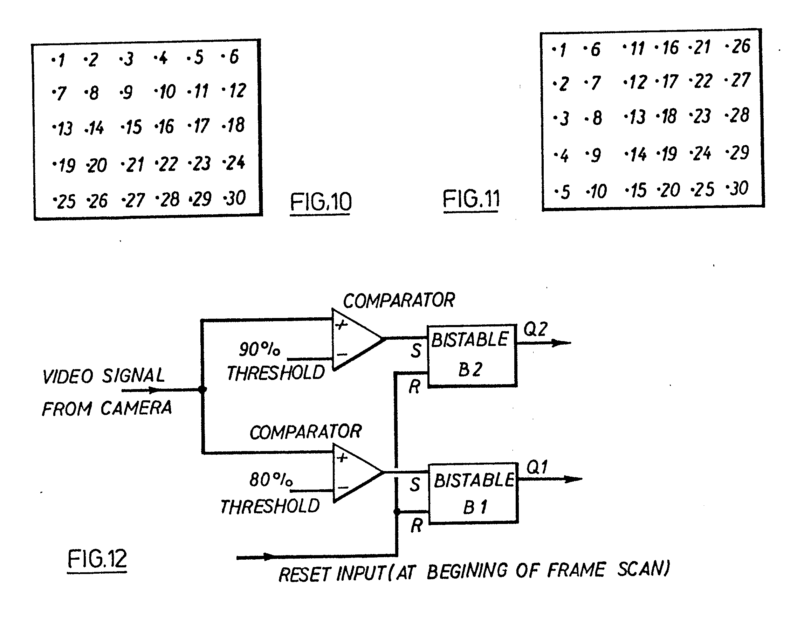

If a digital time base is used, the camera will complete 50 frames per second.  A possible procedure for scanning which allows one point to be measured in each frame and which allows an integration time for each measurement close to the optimum of a frame period is shown in Fig. 10. Here, the laser beam is initially placed at position 1. When the scan passes this point at the beginning of the second frame a response will be detected.  As soon as the spot is detected the laser deflectors move the spot to position 2.  This will create a response near the beginning of the third frame scan.  This procedure is repeated in the sequence shown in Fig. 10 and will result in all 30 positions being detected in a total of 31 frame scans.

If it should happen that very strong optical signals are received from the laser spot in the camera field of view it would be possible for the integration time in the camera to be less than a frame period and to be able still to detect successfully a spot in the field of view. The actual integration time in the camera can only be changed by altering the scan rate, but the effective integration time can be reduced by reducing the time for which the spot is stationary. Thus in a frame period of 20 mS it would be possible for the laser beam to be deflected to, say, five different positions dwelling at each point for 4 mS. This will reduce the energy integrated at each point over a 20 mS period by a factor of 5, but will allow five points to be measured per frame scan. A possible scan sequence would be as shown in Fig. 11. The laser beam is positioned at points 1,2,3,4, and 5 during the first frame scan period, but at times when the scan in the camera has just passed these points. These points will then be detected during the second frame scan during which the beam is deflected to points 6,7,8,9 and 10 in sequence; these points will then be read out during the third scan period, and so on.

If this method of scanning is adopted, careful synchronisation of the deflectors with the scan will be required, and the deflectors (particularly the y axis deflector) must respond very quickly to position demands, the response time would have to be much faster than 1 mS for instance.   In this particular example a total of 30 points would be measured in six frame periods i.e. in 120 mS.

If the optical energy returned from the surface to the camera is very low, as may happen for example if the range is large or if the scattering from the target is very poor, then it may not be possible to obtain a reliable response from the detection circuits.   To obtain a response from the detection circuits when the signal strength is low it will be necessary to reduce the threshold level of the comparator shown in the block diagrams of Fig. 5 and Fig. 7. This may cause spurious responses due to other residual signals, but they may be rejected by using correlation techniques described as follows.

The laser spot dwells for a complete frame scan and all of the co-ordinate points for which the detection circuits respond are stored in the computer memory.   A second scan is then made with the laser switched off and the results stored again.   If the results stored in the second scan are "subtracted" from the results of the first scan, this should result in the actual laser spot being detected.   The process can be extended by repeating the procedure for further frames.

The aperture of the camera must be controlled to accommodate varying intensity of the returned radiation from the laser illuminated spot.   This will vary according to the range, to the absorbtion and scattering properties of the surface illuminated by the spot, and also due to the absorbtion in the atmospheric path. The ideal control will so arrange the camera aperture that the laser illuminated spot causes a maximum level pulse in the video waveform. If the aperture were opened further than this, saturation of the camera tube would occur, thus causing the resulting video pulse to be considerably longer than 140 nS, thereby making detection difficult, and also causing uncertainty as to the precise position of the spot, which will affect the overall resolution of the system.

To achieve automatic aperture control, the unfiltered video signal from the camera is fed to two comparators with thresholds set to 80% and 90% of the full range as shown in Fig. 12. At the beginning of the frame scan both bistables B1 and B2 are set at zero i.e. to logic 0. If during a complete frame scan, the peak video signal is greater than 90% both B1 and B2 bistables will be set to logic 1 i.e. Q1 and Q2 are both logic 1. If the peak signal is between 80% and 90%, Q1 will be set to logic 1 and Q2 to logic 0, but if the peak signal is less than 80% Q1 and Q2 will remain at logic 0.

At the end of the frame, action can be taken according to the table given below.

| Q1 | Q2 | Action |
|----|----|--------|
| O | O | Open aperture one increment |
| 1 | 1 | No action |
| 1 | 1 | Close aperture one increment |

Repeated operation of this process over several frame scans will ultimately cause the aperture to be set so as to cause the peak signal in the video waveform to lie between the 80% and 90% levels of the maximum allowable signal.

If the aperture is controlled with a motorised iris diaphragm, a finite time will be required to make an incremental adjustment. Consequently it may not be possible to make a control correction each frame scan i.e. every 20 mS. If this is the case, control action can be made once every several frame scans, and the result of a control action will have settled before any further action is started.

Some camera tubes have a facility for the electronic control of gain in the tube itself, so that it would be possible to apply the above adjustment strategy directly to the tube gain control. Such a corrective action would be very much faster than with motorised iris control.

It is essential that the camera is focussed properly, otherwise the image produced on the camera tube by the laser illuminated spot will spread and form to large a spot. This will cause the resultant pulse in the video waveform to be of longer duration than 140 nS which will cause difficulties in the detection process, and will lead to uncertainties as to the actual position of the spot in the field of view. The problems of focussing are more acute when the range is close, and when the aperture is set to a low 'f' number, i.e. when the aperture is set to a large diameter.

A mechanism for focus control could be implemented by operating the system initially at any arbitrary focus setting and obtaining crude data from the system. The computer calculation of range from this crude data may not be particularly precise but could be used directly to set a motorised focus control into approximately the correct position. This will then yield more accurate data and allow more precise setting of the focus control the next time.

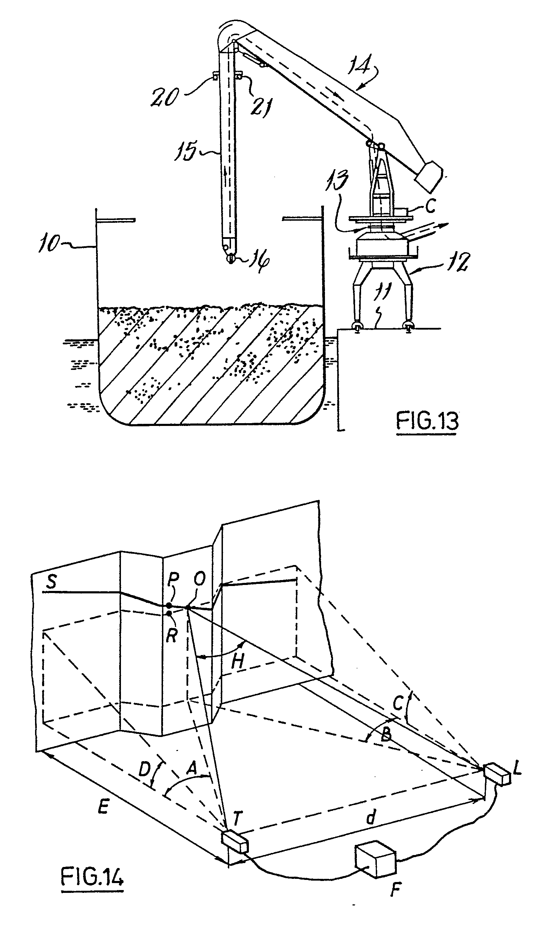

Fig. 13 illustrates a practical embodiment and application of the present invention wherein it is desired to unload bulk solids materials from the hold of a ship 10 moored at a dockside 11. A material transport system comprises a dock-mounted carriage 12 upon which is mounted about a slewing ring 13 a first boom 14 to which is pivotally mounted a second boom 15 at the distal end of which is a material collection device 16. The system therefore is capable of movements such as those known by the terms traverse, i.e. along the dockside, slewing, i.e. about the slewing ring 13, luffing i.e. boom 14 pivots about horizontal axis relative to the supporting structure and kick-in and kick-out, i.e. the boom 15 pivots about a horizontal axis with respect to boom 14. By positioning a laser 20 and television camera 21 close to the upper end of boom 15, signals representative of the instantaneous surface topography of the material within hold H relative to a plane through the camera/laser axis and perpendicular to the axis of the boom 15, can be fed to computer C. Data concerning the angular position of the slewing ring 13 and the angular positions of booms 14 and 15 can also be fed to the computer which, as has been described, may be programmed to produce operating signals representative of the surface characteristics of the material relative to the plane of the dockside 11. Alternatively, thelaser 20 and television camera 21 can be mounted on a platform which is maintained at a level attitude for all configurations of the booms 14 and 15. This can be provided by a conventional parallelogram linkage alongside the booms, leaving the rotational position of the slewing ring 13 as the sole condition requiring additional data to be fed to the computer. The operating signals can be used to drive the various moving parts of the unloading system. In some cases, it may be desired to harvest the material as a surface layer prior to descending to a greater depth. With different materials it might be preferable to cause the collection head to descend substantially the full depth of the material at one position and then to move to a different position depending upon the movements of the material which in turn depend upon the angle of repose of the particulate material in the hold.

This is only one example of ways in which a measuring system in accordance with the invention can be applied to the unloading or reclaiming of material from a contained environment or a stock pile.

Fig. 14 illustrates a second practical embodiment and application of the present invention whereby the surface shape of structures and buildings can be surveyed by the equipment. The points T, L, and O, and the angles A, B, C, and D, on the diagram of Fig. 14 correspond to the similar points and angles on the diagram of Fig. 2.

In this application the laser and television would be separately mounted to provide a known base line length d which is appropriate to the distance E from the base line to the surface being surveyed. The main consideration used to decide upon the length d is that for a typical point O on the surface of the building, the angle H between the lines LO and OT should not be too acute as this will lead to errors in the triangulation calculations used to find the co-ordinates of the point O.  As a general guide the distance d should be of the same order as the distance E.

There is now described a typical sequence of steps to be followed to produce information in a computer memory of the co-ordinates of a series of points on the horizontal line through the point O on the surface of a building.  Such information could be used for the automatic plotting of the horizontal section of the wall of the building through the point O.

Firstly the laser beam is positioned at a point O at the desired height on the building by an operator working at a control console F.  The co-ordinates of the point would then be calculated by the computer.  The computer can then move the laser beam to the left of the point O by a small amount, say to the position P.  The co-ordinates of point P can then be calculated.

It will be seen that the point P will be at a slightly greater height on the building than the original point O since a horizontal scan of the laser beam at a fixed elevation angle will result in the laser spot on the wall moving along the line OS.  Therefore when the co-ordinates of point P are derived, the computer can make a series of adjustments to the elevation angle of the laser beam so as

0159187

to move the spot from P to R which is at the same elevation height as the original point O. This process can be repeated for further points along the line at the desired elevation height. When the scan has been completed there will exist in the computer memory a sequence of co-ordinates relevant to a horizontal line through the point O. This information could then be used, for example, to create a plan view of the front of the wall at an elevation height of O, or, after a number of scans at different heights, an end elevation of the wall.

It is not intended to limit the invention to the above examples only, many variations such as might readily occur to one skilled in the art, being possible without departing from the scope of the invention.

For example, the television camera can be replaced in the measurement system by an array of charge coupled diodes which would, in effect, form a solid-state camera. In this case the general field of view which is to be scanned must be imaged onto the array so that a lens assembly incorporating motorised focus and aperture controls would again be required.

CLAIMS

1.      A method of measuring surface topography comprising the steps of providing a narrow beam of laser light, scanning said beam across a surface from which the incident light is scattered, establishing the instantaneous direction of said beam, providing an optical receiver to detect an illuminated spot on said surface, establishing with said optical receiver the instantaneous position of said illuminated spot, storing in a computer memory signals representative of a number of matched established directions and positions as aforesaid, and correlating with a programme associated with said computer memory, said associated signals thus to produce from said correlation a reading of the three-dimensional shape of said surface as scanned by the laser beam.

2.      A method according to Claim 1, wherein the three-dimensional shape of said surface is built up in the computer memory in the form of an array of three-dimensional co-ordinates.

3.      A method according to Claim 1 or Claim 2, wherein the instantaneous position of said laser beam is established by causing the beam to dwell at a number of known angles from a datum line, and for each established direction of said laser beam the angular bearing of the illuminated spot on said surface is detected by said optical receiver.

4.      A method according to any preceding claim, wherein said optical receiver is a television camera producing a signal in the video waveform, and the illuminated spot on said surface is established as a position in the television raster scan.

5.      A method according to Claim 4, wherein, from said video waveform, pulses due to optical stimuli other than light scattered by said laser beam, within the field of view of the camera are removed by optical filtration using a narrow bandwidth optical filter with a peak response at or close to the laser wavelength.

6.      A method according to Claim 4, wherein low frequency components in said video waveform are removed therefrom electronically by a high pass filter.

7.      A method according to Claim 4, wherein spurious pulses in said video waveform are rejected by means producing an output pulse only when input pulses to said means are within a predetermined range of time duration.

8.      A method according to Claim 1, in which the surface topography of a stockpile of bulk material is measured to optimise the performance of associated material transporting means comprising the steps of providing a laser and a television camera mounted in spaced disposition above said stockpile, scanning a laser beam across the surface of said material, detecting the positions of an array of laser illuminated spots on said surface to establish a reading of its three-dimensional shape, and producing signals dependant upon the reading of said three-dimensional shape to control said material-transporting means.

9. A method according to Claim 1, in which the surface topography of a wall or land mass is measured, comprising the steps of providing a laser and a television camera disposed at first and second given positions relative to said surface, scanning a laser beam across said surface detecting the positions of an array of laser illuminated spots on said surface to establish a reading of its three-dimensional shape, and signals representative of said shape being fed to a computer wherein they are correlated to enable a plan or elevation of the surface to be determined.

10. A surface topography measuring system comprising a laser producing a narrow beam of light, means for scanning said beam from a first given point, towards and across a surface from which the incident light is scattered, means for establishing the instantaneous direction of said beam from said first given point, an optical receiver positioned at a second given point for detecting an illuminated spot on said surface and including means for establishing the instantaneous position of said illuminated spot and a computer memory in which associated signals are stored representative of a number of matched established directions and positions as aforesaid, and programmed to correlate said associated signals thus to produce a reading of the three-dimensional shape of said surface as scanned by the laser beam.

11. A system according to Claim 10, wherein said optical receiver is a television camera producing a signal in the video waveform, and said instantaneous position of the illuminated spot on said surface is established as a position in the television raster scan.

12. A system according to Claim 10, including means automatically to reject signals resultant from illuminated spots on said surface which are not formed by said laser beam.

13. A system according to Claim 10, including means to distinguish the laser illuminated spot from all other optical stimuli within the field of view of the optical receiver.

14. A system according to Claim 13, wherein said distinguishing means include a narrow bandwidth optical filter.

0159187
HP/1775

15.    A system according to Claim 13, wherein said distinguishing means include a high pass filter for removal of low frequency components from a signal in the video waveform.

16.    A system according to Claim 13, wherein said distinguishing means include a time filter for rejecting pulses outside a predetermined range of duration.

17.    A system according to Claim 11, including a digital time base register including a line counter/register the contents of which indicate the line which is currently being scanned by the camera, and a position-in-line counter/register which indicates the position in the line, which is currently being scanned.

18.    A system according to Claim 11, wherein said television camera includes means whereby the lens aperture is automatically controlled to produce a maximum level pulse in the video waveform.

19.    A system according to Claim 11, including means for automatically controlling the focus of the television camera lens to ensure that it remains substantially focussed on the surface being scanned.

20.    A system according to Claim 10, for measuring the surface topography of a stockpile of bulk materials and associated with material transporting means there being mounted in spaced disposition above said stockpile a laser and a television camera, the associated signals within said computer being adapted to control operation of said material transporting means according to the surface topography of the material.

21.      A system according to Claim 10, for surveying a fixed surface, including a laser and a television camera disposed at spaced given positions remote from said surface, whereby the reading of the three-dimensional shape of said surface within said computer is adapted with an associated programme to produce an equivalent reading of a plan or elevation of said surface.

22.      A system according to Claim 10, in which said optical receiver is an array of charge-coupled diodes.

23.      A method of measuring surface topography substantially as hereinbefore described.

24.      A surface topography measuring system substantially as hereinbefore described, with reference to and as illustrated in the various figures of the accompanying drawings.

FIG.1

FIG.2

0159187

FIG.3

(a)

(b)

(c)

FIG.4

FIG.5

FIG.6

FIG.7

FIG. 8

FIG.9

| | | | | | |
|---|---|---|---|---|---|
| ·1 | ·2 | ·3 | ·4 | ·5 | ·6 |
| ·7 | ·8 | ·9 | ·10 | ·11 | ·12 |
| ·13 | ·14 | ·15 | ·16 | ·17 | ·18 |
| ·19 | ·20 | ·21 | ·22 | ·23 | ·24 |
| ·25 | ·26 | ·27 | ·28 | ·29 | ·30 |

FIG.10

| | | | | | |
|---|---|---|---|---|---|
| ·1 | ·6 | ·11 | ·16 | ·21 | ·26 |
| ·2 | ·7 | ·12 | ·17 | ·22 | ·27 |
| ·3 | ·8 | ·13 | ·18 | ·23 | ·28 |
| ·4 | ·9 | ·14 | ·19 | ·24 | ·29 |
| ·5 | ·10 | ·15 | ·20 | ·25 | ·30 |

FIG.11

FIG.12

COMPARATOR

VIDEO SIGNAL FROM CAMERA

90% THRESHOLD

COMPARATOR

80% THRESHOLD

BISTABLE B2    Q2

BISTABLE B1    Q1

RESET INPUT(AT BEGINING OF FRAME SCAN)

0159187

0159187

FIG.13

FIG.14